# FASCICULE DE BREVET EUROPEEN

(11) **EP 0 511 030 B1**
(45) Date de publication et mention de la délivrance du brevet: **30.08.1995**
(21) Numéro de dépôt: 92400711.5
(22) Date de dépôt: 17.03.1992
(51) Int. Cl.: A47C 31/02, B60N 2/44

(54) **Siège, notamment pour un véhicule automobile**
Sitz, insbesondere für Kraftfahrzeuge
Seat, especially for motor vehicles

(30) Priorité: 18.04.1991 FR 9104812
(43) Date de publication de la demande: 28.10.1992
(73) Titulaire: AUTOMOBILES PEUGEOT, 75116 Paris (FR); AUTOMOBILES CITROEN, 92200 Neuilly-sur-Seine (FR)
(72) Inventeur: Picard, Jean, F 92700 Colombes (FR)
(74) Mandataire: Moncheny, Michel

(56) Documents cités:
- EP-A- 0 231 692
- EP-A- 0 252 783
- DE-A- 1 909 235
- DE-A- 3 037 834
- DE-B- 1 942 308
- FR-A- 2 471 163
- FR-A- 2 596 626
- GB-A- 2 046 588

## Description

L'invention concerne un siège, notamment pour véhicule automobile.

On connaît déjà dans l'état de la technique des sièges du type comprenant une coiffe recouvrant une matelassure du siège, la coiffe comportant des moyens de rappel en direction de la matelassure, les moyens de rappel comprenant une bande de toile dont un bord est solidaire de la coiffe et dont un autre bord est solidaire d'une poutre rigide fabriquée en matière plastique fusible surmoulée sur la bande de toile de rappel, cette poutre comportant au moins un organe d'accrochage pour coopérer avec un organe de retenue inséré dans la matelassure.

Ces moyens de rappel de la coiffe sont utilisés afin d'assurer une bonne tenue de la coiffe et de soigner l'aspect esthétique du dossier et/ou du coussin du siège. On forme pour cela, sur la face externe du siège sur laquelle vient s'appuyer l'utilisateur, des parties en creux obtenues par un rappel de la coiffe vers la face opposée du siège, c'est-à-dire vers l'intérieur de la matelassure.

Le document FR-A-2 596 626 montre un exemple de réalisation de moyens de rappel de coiffe de siège du type précité dont les organes d'accrochage, répartis le long de la poutre rigide, sont constitués, chacun, d'une tige dont une extrémité est solidaire de la poutre et dont l'autre extrémité a la forme d'une ancre de marine. Ces organes d'accrochage sont accrochés dans des organes de retenue constitués par des fils tissés insérés dans la matelassure.

Pour enlever la coiffe du siège, on peut, soit arracher l'extrémité des organes d'accrochage en forme d'ancre de marine, ce qui détériore les organes de retenue de la matelassure, soit sectionner des parties des moyens de rappel, ce qui détériore la bande de toile ou la poutre où sont fixés les organes d'accrochage.

Le document DE-A-30 37834 décrit un siège, notamment pour véhicule automobile, dans lequel les organes d'accrochage sont fixés de façon amovible sur une poutre accrochée dans des passants reliés à une bande de toile de rappel. Ces moyens de fixation des organes d'accrochage sont inadaptés pour une poutre surmoulée sur la bande de rappel.

L'invention a pour but de permettre d'enlever la coiffe du siège sans détériorer, ni la bande de toile ou la poutre rigide des moyens de rappel, ni les organes de retenue des organes d'accrochage insérés dans la matelassure.

A cet effet, l'invention a pour objet un siège du type précité caractérisé en ce que l'organe d'accrochage comprend une broche et une partie d'assemblage formant un cavalier entre les branches duquel est reçu le bord longitudinal libre de la poutre, l'âme du cavalier étant fixée par son milieu sur la broche, le cavalier étant destiné à être fixé sur la poutre rigide par des moyens de fixation amovibles comprenant un organe de liaison amovible engagé dans des trous alignés traversant au moins une branche du cavalier et la poutre rigide.

Suivant d'autres caractéristiques de l'invention:
- l'organe de liaison amovible est une cheville engagée en force dans les trous alignés ;
- l'organe de retenue comprend un réseau de fils insérés dans la matelassure, la matelassure comporte un évidement ou puits pour l'introduction et le guidage de la broche de l'organe d'accrochage, et la broche de l'organe d'accrochage a une forme et une dimension adaptée pour être introduite et retenue dans le réseau de fils insérés dans la matelassure ;
- la broche de l'organe d'accrochage a une forme générale cylindrique et comporte au moins un jeu d'au moins deux aiguilles d'accrochage souples et saillantes, disposées sur la périphérie de la broche, dont les pointes sont orientées vers la partie d'assemblage de l'organe d'accrochage, et sont repliables le long de la broche ;
- la broche comporte plusieurs jeux d'aiguilles d'accrochage espacés l'un de l'autre dans la direction axiale de la broche ; et
- la broche et la partie d'assemblage constituent une seule pièce en plastique moulé par injection.

Un exemple de réalisation de l'invention va être décrit plus en détail ci-dessous en se référant aux dessins annexés, sur lesquels :
- la figure 1 est une vue en perspective et en coupe d'un siège selon l'invention ;
- la figure 2 est une vue en perspective et en coupe, à grande échelle, montrant les moyens de rappel de la coiffe ;
- la figure 3 est une vue schématique en perspective éclatée d'un organe d'accrochage des moyens de rappel ;
- la figure 4 est une vue schématique en élévation d'un organe d'accrochage fixé dans la matelassure.

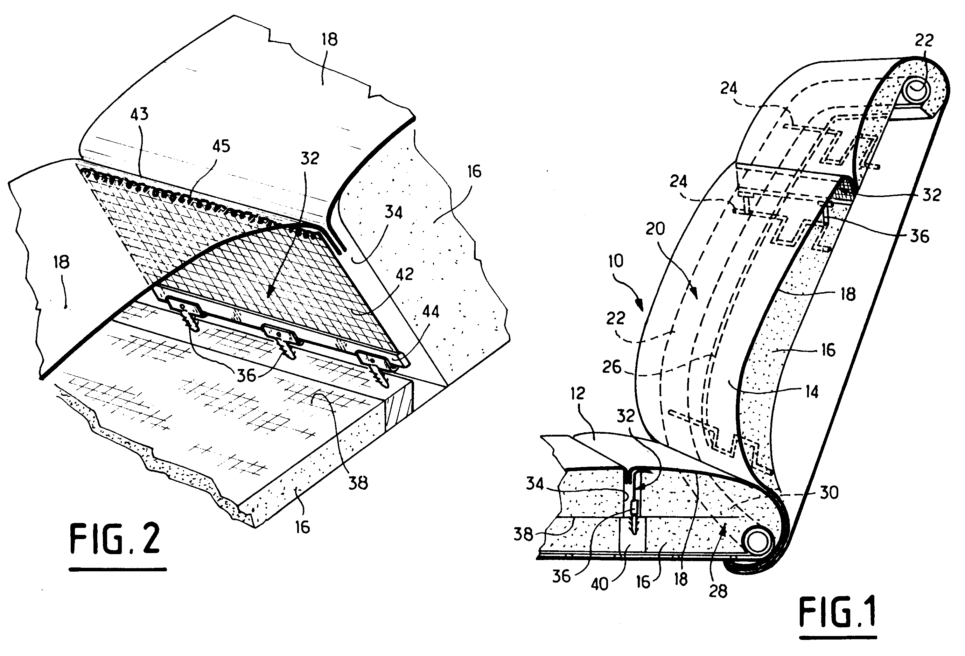

On voit à la figure 1 un siège 10 pour véhicule automobile comprenant un coussin 12, représenté à peu près horizontalement, sur lequel on s'assied et un dossier 14, représenté à peu près verticalement. Le coussin 12 et le dossier 14 comportent une matelassure 16 recouverte d'une coiffe 18. La matelassure 16 du dossier 14 est renforcée par une armature 20. Cette armature 20 comprend un élément tubulaire rigide 22, des éléments de renforcement transversaux filiformes 24, pliés en créneaux, et des éléments de renforcement longitudinaux filiformes 26. Le coussin 12 du siège comporte une armature 28 comprenant des éléments analogues à ceux du dossier 14, dont on voit l'élément tubulaire rigide 30 sur la figure 1.

On a également représenté sur la figure 1 des moyens de rappel 32 de la coiffe 18 vers la matelassure 16, disposés dans le coussin 12 et le dossier 14 du siège. Ces moyens de rappel sont montrés plus en détail aux figures 2 et suivantes. Les moyens de rappel 32 sont disposés dans des espaces vides 34 correspondant à une interruption de la matelassure 16. Les moyens de rappel 32 sont maintenus dans la matelassure 16 par des organes d'accrochage 36 accrochés à des organes de retenue 38 insérés dans la matelassure 16 qui sont montrés uniquement dans le coussin 12 à la figure 1. Les organes d'accrochage 36 sont accrochés aux organes de retenue 38 en étant guidés et reçus dans des évidements ou puits 40 de la matelassure 16.

On voit à la figure 2 que les moyens de rappel 32 comportent une bande de toile 42 dont un premier bord est fixé à la coiffe 18 du siège, le long d'un repli ou d'un raccord bord à bord de cette coiffe, pour constituer une partie en creux 43, par rappel de la coiffe 18 vers l'intérieur de la matelassure 16. Un second bord de la bande de toile 42, opposé au premier bord, est solidaire d'une poutre rigide 44, s'étendant longitudinalement le long de ce second bord de la bande de toile 42. Des organes d'accrochage 36 sont répartis le long de cette poutre 44 en étant orientés à l'opposé de la bande de toile 42.

La bande de toile 42 peut être constituée par un morceau de toile de coton, de nylon ou de tout autre textile naturel ou synthétique ayant une résistance suffisante.

La bande de toile 42 peut être reliée à la coiffe 18 par piqûre suivant une ligne de jonction cousue 45. Suivant les matériaux utilisés pour fabriquer la toile 42 et la coiffe 18, cette jonction peut être également réalisée par soudure, collage ou agrafage.

La poutre 44, qui est généralement en matière plastique fusible, peut être reliée à la bande de toile 42 par surmoulage.

On voit également à la figure 2 un organe de retenue 38, disposé dans la matelassure 16 vers laquelle sont dirigés les moyens de rappel 32, destiné à coopérer avec les organes d'accrochage 36. L'organe de retenue 38 est constitué par un réseau de fils inséré dans la matelassure 16. L'organe de retenue 38 est donc un insert constitué, par exemple, par une toile polyamide noyée à l'intérieur de la matelassure et occupant toute la surface du siège. L'insert 38 pourrait être également constitué par une toile de coton ou par toute autre réseau de fils ayant une résistance suffisante et assemblés pour constituer des mailles permettant l'accrochage des organes d'accrochage 36.

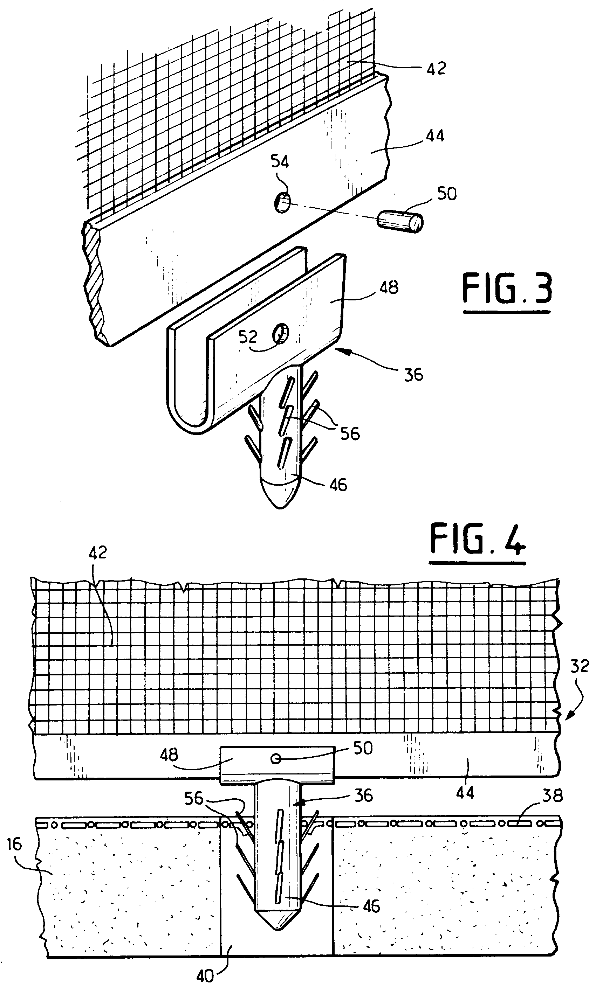

Les figures 3 et 4 montrent un organe d'accrochage 36 plus en détail. L'organe d'accrochage 36 comporte une broche 46 et une partie d'assemblage 48 avec la poutre 44 qui est disposée à une extrémité de la broche 46. L'autre extrémité de la broche 46 est de forme pointue, afin de faciliter l'introduction de l'organe d'accrochage dans les mailles de l'insert 38.

La partie d'assemblage 48 de l'organe d'accrochage est constituée d'un cavalier 48 entre les branches duquel est emboîté le bord longitudinal libre de la poutre 44. Le cavalier 48 a par exemple une longueur suivant la direction longitudinale de la poutre 44 de 15 mm. L'âme du cavalier 48 est fixée par son milieu sur la broche 46. L'organe d'accrochage 36 est fixé sur la poutre 44 par un organe de liaison amovible constitué d'une cheville 50 engagée en force dans des trous débouchant et alignés 52,54 ménagés respectivement dans les branches du cavalier 48 et dans la poutre 44. Les trous 52 des deux branches du cavalier ont par exemple des diamètres de 2 mm environ. Ils sont situés dans le prolongement de la broche 46, par exemple à 5 mm de l'âme du cavalier.

La broche 46 de l'organe d'accrochage 36 est de forme générale cylindrique. Elle a par exemple une longueur de 30 mm et un diamètre de 10 mm. Elle comporte sur son pourtour des aiguilles saillantes 56 disposées sur trois niveaux espacés suivant l'axe de la broche 46. Chaque niveau comporte quatre aiguilles diamétralement opposées deux à deux. Les aiguilles 56 sont fabriquées dans un matériau souple, par exemple du plastique. Elles sont orientées vers le cavalier 48 de l'organe d'accrochage 36 en formant un angle d'environ 60° par rapport à l'axe de la broche. La souplesse des aiguilles 56 permet de les replier le long de la broche 46. Les aiguilles ont par exemple une longueur d'environ 5 à 6 mm et un diamètre d'environ 1 mm.

La broche 46 munie de ses aiguilles 56 et le cavalier 48 de l'organe d'accrochage 36 peuvent être réalisées d'un seul bloc dans un matériau plastique moulé par injection.

A la figure 4 on voit comment l'organe d'accrochage 36 est accroché dans l'insert 38. On réalise l'engagement de l'organe d'accrochage 36 par sa broche 46 munie d'aiguilles 56, dans un puits 40 de la matelassure 16, par simple pression sur la poutre 44. La retenue de la poutre 44 et donc des moyens de rappel 32 est assurée par les mailles de l'insert 38 dans lesquelles ont pénétré la broche 46 et les aiguilles 56. Comme la broche 46 comporte plusieurs niveaux d'aiguilles 56, on peut l'enfoncer plus ou moins dans le puits 40. Ceci permet de tendre plus ou moins les moyens de rappel 32 et par conséquent la coiffe 18.

Pour enlever la coiffe 18 du siège, on sectionne les organes d'accrochage 36 au niveau de leurs broches 46, entre le cavalier 48 et l'insert 38. La partie de la broche 46 se trouvant dans le puits 40 tombe alors au fond de celui-ci. Lorsque la coiffe 18 est retirée du siège, on enlève les cavaliers 48 des organes d'accrochage 36, que l'on a sectionnés, en extrayant la cheville 50 des trous 52,54 du cavalier et de la poutre 44. Pour remettre la coiffe 18 en place sur le siège, il suffit de disposer à nouveau des organes d'accrochage 36 le long de la poutre 44 et de les réengager dans les puits 40 à travers les mailles de l'insert 38.

On voit donc que l'on peut retirer du siège et replacer sur celui-ci la coiffe 18 sans détériorer l'insert 38 placé dans la matelassure 16 du siège ni la poutre 44 ou la bande de toile 42 des moyens de rappel 32.

La mise en place des moyens de rappel 32 de la coiffe 18 est réalisée rapidement par des moyens simples ne faisant appel à aucun outillage spécifique. Il est également facile d'enlever la coiffe 18 car les moyens de rappel comportent des organes d'accrochage 36 qui sont amovibles. La broche 46 de chaque organe d'accrochage 36 peut comporter une ligne d'affaiblissement au niveau de sa partie qui est disposée entre le cavalier 48 et l'insert 38 pour faciliter le sectionnement de la broche lors de l'enlèvement de la coiffe 18.

L'invention ne se limite pas aux modes de réalisation qui ont été décrits. On peut imaginer des organes d'accrochage 36 dont la partie d'assemblage 48 a une forme différente de celle d'un cavalier et dont la broche 46 comporte des éléments autres que les aiguilles 56 pour coopérer avec les fils de l'organe de retenue 38. Les organes d'accrochage peuvent coopérer avec un organe de retenue différent d'un insert constitué par un réseau de fils à l'intérieur de la matelassure. L'organe de retenue peut être constitué par une partie de l'armature du siège ou par un moyen d'accrochage rapporté sur cette armature. Cette armature peut d'ailleurs être différente de celle qui a été décrite.

On peut imaginer l'utilisation de toutes matières appropriées pour constituer la bande de toile, la poutre rigide, les organes d'accrochage et les organes de retenue introduits dans la matelassure.

Enfin, l'invention peut s'appliquer à des sièges autres que ceux destinés à des véhicules automobiles.

## Revendications

1. Siège, notamment pour véhicule automobile, du type comprenant une coiffe (18) recouvrant une matelassure (16) du siège, la coiffe comportant des moyens de rappel (32) en direction de la matelassure (16), les moyens de rappel comprenant une bande de toile (42) dont un bord est solidaire de la coiffe (18) et dont un autre bord est solidaire d'une poutre rigide (44) fabriquée en matière plastique fusible surmoulée sur la bande de toile de rappel (42), cette poutre (44) comportant au moins un organe d'accrochage (36) pour coopérer avec un organe de retenue (38) inséré dans la matelassure (16), caractérisé en ce que l'organe d'accrochage (36) comprend une broche (46) et une partie d'assemblage (48) formant un cavalier entre les branches duquel est reçu le bord longitudinal libre de la poutre (44), l'âme du cavalier (48) étant fixée par son milieu sur la broche (46), le cavalier étant destiné à être fixé sur la poutre rigide (44) par des moyens de fixation amovibles comprenant un organe de liaison amovible (50) engagé dans des trous alignés (52,54) traversant au moins une branche du cavalier (48) et la poutre rigide (44).

2. Siège selon la revendication 1, caractérisé en ce que l'organe de liaison amovible (50) est une cheville (50) engagée en force dans les trous alignés (52,54).

3. Siège selon l'une quelconque des revendications précédentes, caractérisé en ce que l'organe de retenue (38) comprend un réseau de fils (38) insérés dans la matelassure (16), en ce que la matelassure (16) comporte un évidement ou puits (40) pour l'introduction et le guidage de la broche (46) de l'organe d'accrochage, et en ce que la broche (46) de l'organe d'accrochage a une forme et une dimension adaptée pour être introduite et retenue dans le réseau de fils (38) insérés dans la matelassure (16).

4. Siège selon la revendication 3, caractérisé en ce que la broche (46) de l'organe d'accrochage a une forme générale cylindrique et comporte au moins un jeu d'au moins deux aiguilles d'accrochage (56) souples et saillantes, disposées sur la périphérie de la broche (46), dont les pointes sont orientées vers la partie d'assemblage (48) de l'organe d'accrochage, et sont repliables le long de la broche (46).

5. Siège selon la revendication 4, caractérisé en ce que la broche (46) comporte plusieurs jeux d'aiguilles d'accrochage (56) espacés l'un de l'autre dans la direction axiale de la broche (46).

6. Siège selon l'une quelconque des revendications précédentes, caractérisé en ce que la broche (46) et la partie d'assemblage (48) constituent une seule pièce en plastique moulé par injection.

## Claims

1. Seat, in particular for an automotive vehicle, of a type including a cover (18) covering a padded section (16) of the seat, the cover including means (32) for pulling back the cover in the direction of the padded section (16), the means of pulling back including a strip of cloth (42) one edge of which is integral with the cover (18) and another edge of which is integral with a rigid bar (44) made of meltable plastic duplicate moulded over the pulling back cloth strip (42), this bar (44) including at least one engagement device (36) for co-operating with a retention device (38) inserted in the padded section (16), characterized in that the engagement device (36) contains a spindle (46) and an assembly part (48) forming a U-shaped bracket between the arms of which the free longitudinal edge of the bar (44) is received, the core of the U-shaped bracket (48) being fixed by its centre on the spindle, the U-shaped bracket being intended to be fixed on the rigid bar (44) by removable fixing means including a removable linking device (50) engaged in aligned holes (52, 54) passing through at least one arm of the U-shaped bracket (48) and the rigid bar (44).

2. Seat according to claim 1, characterized in that the removable linking device (50) is a pin (50) engaged with force in the aligned holes (52, 54).

3. Seat according to any one of the preceding claims, characterized in that the retention device (38) includes a network of wires (38) inserted in the padded section (16), in that the padded section (16) contains a recess or well (40) for the introduction and guiding of the spindle (46) of the engagement device, and in that the spindle (46) of the engagement device has a shape and size suitable for it to be introduced and retained in the network of wires (38) inserted in the padded section (16).

4. Seat according to claim 3, characterized in that the spindle (46) of the engagement device has a generally cylindrical shape and includes at least one set of at least two flexible and projecting engagement needles (56), arranged on the periphery of spindle (46), the points of which are orientated towards the assembly part (48) of the engagement device, and are foldable backwards along the spindle (46).

5. Seat according to claim 4, characterized in that the spindle (46) contains several sets of engagement needles (56) spaced one after the other in the axial direction of the spindle (46).

6. Seat according to any one of the preceding claims, characterized in that the spindle (46) and the assembly part (48) constitute a single plastic piece which is injection moulded.

## Patentansprüche

1. Sitz, insbesondere für Kraftfahrzeuge, des Typs, der einen Bezug (18) enthält, der eine Polsterung (16) bedeckt, wobei der Bezug Mittel zum Zurückziehen (32) in Richtung der Polsterung (16) enthält, wobei die Rückzugmittel ein Leinenband (42) enthalten, wovon eine Kante mit dem Bezug (18) verbunden ist und eine andere Kante mit einem starren Träger (44) verbunden ist, der aus schmelzbarem Kunststoffmaterial hergestellt ist, das an das Rückzug-Leinenband (42) angegossen ist, wobei dieser Träger (44) wenigstens ein Einhakelement (36) enthält, das mit einem Halteelement (38) zusammenwirkt, welches seinerseits in die Polsterung (16) eingezogen ist, dadurch gekennzeichnet, daß das Einhakelement (36) eine Welle (46) und einen Zusammenfügungsabschnitt (48) enthält, der eine Klammer bildet, zwischen deren Schenkeln die freie Längskante des Trägers (44) aufgenommen ist, wobei der Kern der Klammer (48) in seiner Mitte an der Welle (46) befestigt ist, wobei die Klammer dazu vorgesehen ist, am starren Träger (44) durch lösbare Befestigungsmittel befestigt zu werden, die ein lösbares Verbindungselement (50) enthalten, das in aufeinander ausgerichteten Löchern (52, 54) in Eingriff ist, die wenigstens einen Schenkel der Klammer (48) und den starren Träger (44) durchqueren.

2. Sitz nach Anspruch 1, dadurch gekennzeichnet, daß das ablösbare Verbindungselement (50) ein Zapfen (50) ist, der mit Kraft mit den ausgerichteten Löchern (52, 54) in Eingriff gebracht wird.

3. Sitz nach irgendeinem der vorangehenden Ansprüche, dadurch gekennzeichnet, daß das Halteelement (38) ein Fadennetz (38) enthält, das in die Polsterung (16) eingezogen ist, daß die Polsterung (16) eine Aussparung oder einen Schacht (40) enthält, der dem Einführen und der Führung der Welle (46) des Einhakelements dient, und daß die Welle (46) des Einhakelements eine geeignete Form und geeignete Anmessungen besitzt, damit sie in das Fadennetz (38), das in die Polsterung (16) eingezogen ist, eingeführt und in ihm gehalten werden kann.

4. Sitz nach Anspruch 3, dadurch gekennzeichnet, daß die Welle (46) des Einhakelements eine allgemeine zylindrische Form besitzt und wenigstens einen Satz von wenigstens zwei elastischen und vorstehenden Einhaknadeln (56) enthält, die an der Umfangsfläche der Welle (46) angeordnet sind und deren Spitzen zum Zusammenfügungsabschnitt (48) des Einhakelements gerichtet sind und längs der Welle (46) umgebogen werden können.

5. Sitz nach Anspruch 4, dadurch gekennzeichnet, daß die Welle (46) mehrere Sätze von Einhaknadeln (56) enthält, die in axialer Richtung der Welle (46) voneinander beabstandet sind.

6. Sitz nach irgendeinem der vorangehenden Ansprüche, dadurch gekennzeichnet, daß die Welle (46) und der Zusammenfügungsabschnitt (48) ein einziges Teil aus Kunststoffmaterial bilden, das durch Druckguß hergestellt ist.
